# EUROPÄISCHE PATENTSCHRIFT

(11) **EP 2 668 237 B1**
(45) Veröffentlichungstag und Bekanntmachung des Hinweises auf die Patenterteilung: **27.07.2016**
(21) Anmeldenummer: 12701869.5
(22) Anmeldetag: 25.01.2012
(51) Int. Cl.: C08L 75/04, C08J 9/00

(54) **POLYURETHAN MIT VERBESSERTEN DÄMM-EIGENSCHAFTEN**
POLYURETHANE WITH IMPROVED INSULATING PROPERTIES
POLYURÉTHANE PRÉSENTANT DES PROPRIÉTÉS D'ISOLATION AMÉLIORÉES

(30) Priorität: 27.01.2011 EP 11152418
(43) Veröffentlichungstag der Anmeldung: 04.12.2013
(73) Patentinhaber: BASF SE, 67056 Ludwigshafen am Rhein (DE)
(72) Erfinder: GRIESER-SCHMITZ, Christof, 49088 Osnabrück (DE); ELLERSIEK, Carsten, 49525 Lengerich (DE)
(74) Vertreter: BASF IP Association
(86) Internationale Anmeldenummer: PCT/EP2012/051128
(87) Internationale Veröffentlichungsnummer: WO 2012/101165

(56) Entgegenhaltungen:
- EP-A1- 0 693 526
- EP-A2- 0 960 723
- DE-A1- 4 132 282
- DE-A1- 4 322 601
- GB-A- 2 053 944
- GB-A- 2 298 424

## Beschreibung

Gegenstand der Erfindung ist ein Polyurethan mit verbesserter Dämmeigenschaft, das bevorzugt bei der Isolierung von Hohlkörpern, insbesondere bei der Isolierung von Rohrleitungssystemen, Anwendung findet.

EP 0 693 526 A1 offenbart ein Verfahren zur Herstellung von PUR-Hartschaumstoffen. Dabei wird PUR-Hartschaumpulver in einer Menge von bis zu 10 Gew.-% in PUR-Hartschaumstoff niedriger Rohrdichte eingesetzt. Die so erzeugten PUR-Hartschaumstoffe können als Dämmplatten für die Dachisolierung verwendet werden.

DE 43 22 601 A1 offenbart ebenfalls ein Verfahren zur Herstellung von HartschaumFormkörpern auf Polyurethanbasis. Die Herstellung der Hartschaum-Formkörper basiert auf der Wiederverwendung von industriellem Polyurethanhartschaumschrott. wobei die durchschnittliche Teilchengröße des zerkleinerten Polyurethanhartschaums 0,5 mm beträgt. Die so erzeugten Polyurethanhartschaumstoffe dienen als Wand- bzw. Dachelemente.

DE 41 32 282 A1 offenbart ein Verfahren zur Verwertung von zumindest teilweise aus Polyurethan bestehenden Kunststoffen. wobei die Herstellung eines Polyurethanhartschaums aus zerkleinerten Schaumresten aus der Kühlschrankentsorgung mit einer Korngrößenverteilung von 0,01-2 mm offenbart wird.

GB 20 53 944 A offenbart die Verwertung von bereits aufgeschäumtem Polymerschaum für die Herstellung von neuem Schaum. Dazu wird ein bereits aufgeschäumter Polyurethanschaum zerkleinert, bis die Partikel über eine mittlere Korngröße von 20 µm verfügen.

GB 22 98 424 A offenbart einen Polyurethanhartschaum zur Isolation von Gebäuden wobei eine aufgeschäumte Polyurethanmatrix mit einem Füllstoff aus Polystyrol und einer Druckfestigkeit von 30 kg/cm³ offenbart wird.

EP 0 960 723 A2 offenbart ein Verfahren zur Ummantelung und Isolierung von Rohren. Als Isolationsmittel wird Polyurethanhartschaum verwendet, der eine geringe Wärmeleitfähigkeit aufweist.

Hohlräume werden häufig mit Schäumen, bevorzugt mit Polyurethanschäumen, die sich durch herausragende Wärmeleitfähigkeitswerte auszeichnen, gefüllt, um auf diese Weise die Isoliereigenschaft des Hohlraumes zu verbessern.

In die Hohlräume wird mittels einer Polyurethandosiermaschine ein flüssiges Reaktionsgemisch eingefüllt welches sich in noch flüssiger Form in dem Hohlraum verteilen muss bevor die Reaktion einsetzt. Sowie die Reaktion beginnt findet die weitere Verteilung durch Fließen des langsam in der Viskosität ansteigenden Schaumes statt, bis das Material ausreagiert ist. Um insbesondere größere Hohlräume zu dämmen, muss daher das Reaktionsprofil des reagierenden Polyurethanschaumes sehr langsam eingestellt sein. Dies beruht auf der Tatsache, dass der Schaum im flüssigen, d.h. noch nicht reagierten Zustand, im Hohlraum eine gute Vorverteilung erreichen muss. Weiterhin muss bei großen Hohlraumdimensionen genügend Zeit zur Verfügung stehen, um das benötigte Polyurethanmaterial innerhalb der Startzeit in den Hohlraum einzufüllen. Auch hierfür benötigt man eine lange Startzeit. Die Startzeit ist die Zeit, die vergeht, bevor das flüssige Reaktionsgemisch beginnt aufzuschäumen. Lange Startzeiten führen jedoch erfahrungsgemäß in dem so hergestellten Schaumsystem zu größeren Zelldurchmessern, da sich viele der entstehenden Zellen zu größeren Einheiten verbinden, wenn das reagierende Reaktionsgemisch diese nicht durch Viskositätsaufbau und Erreichen der Abbindezeit fixiert. Da der Radius der Zellen im Schaum in die Berechnung der Strahlungsswärmeleitfähigkeit quadratisch eingeht, kommt es bei einem Schaum mit einer langen Startzeit zu einer signifikanten Erhöhung der Wärmeleitfähigkeit verglichen mit einem Schaum mit kurzer Startzeit, der dann wiederum nicht für die Befüllung großer Hohlräume geeignet ist. Aus ökonomischen und ökologischen Gründen ist jedoch bei der Isolierung von Hohlräumen eine minimale Wärmeleitfähigkeit des Schaumes und somit eine maximale Energieeinsparung gewünscht.

Besonders ausgeprägt ist diese Fragestellung auch bei Rohrleitungssystemen, die für den Transport von im Vergleich zur Umgebungstemperatur heißen oder kalten Medien benutzt werden, besonders dann, wenn sie einen Lebenszyklus von mehr als 30 Jahren besitzen. Derartige Rohrleitungssysteme, insbesondere für Fernwärme, werden häufig aus einzelnen Rohrsegmenten zusammengefügt. Standardmäßig werden hierfür Rohrlängen von beispielsweise 6 m, 12 m oder 16 m verwendet. Benötigte Überhanglängen werden speziell gefertigt oder aus bestehender Konfektionsware zugeschnitten. Mit Polyurethanschaumstoffen gedämmte Rohre sind im Stand der Technik bekannt und beispielsweise in EP-A-865 893 und DE-A-197 42 012 beschrieben. Die einzelnen Rohrsegmente werden verschweißt und mit bestehender Muffentechnik im Bereich der Schweißnaht nachgedämmt. Die Dauer der Herstellung einer Muffenverbindungen ist ein zeitlich begrenzender Faktor beim Verlegen der Rohrware. Zudem stellen sie häufig eine Schwachstelle bei der Dämmeigenschaft dar, da sie üblicherweise unter Zeitdruck und Umwettereinflüssen, wie Temperatur, Verschmutzungen und Feuchtigkeit, vor Ort auf der Baustelle hergestellt werden. Weiterhin stellt die Zahl der Muffenverbindungen einen großen Kostenfaktor bei der Installation von Rohrleitungssystemen dar.

In der Rohre verarbeitenden Industrie ist es daher erstrebenswert, möglichst wenig Muffenverbindungen, bezogen auf die Länge einer Leitung, zu installieren und gleichzeitig die Qualität, insbesondere die Wärmeleitfähigkeit zu optimieren. Dies wird erreicht durch den Einsatz von längeren Einzelrohrsegmenten, deren Produktion allerdings erhöhte Anforderungen stellt und häufig zu technischen Problemen führt. Je größer der auszuschäumende Ringspalt zwischen dem Außen- und Innenrohr ist, desto mehr flüssiges Reaktionsgemisch muss eingefüllt werden und desto langsamer muss die Reaktion, mit den dann wie oben genannten Nachteilen, stattfinden.

Beim Verschäumen der Rohre muss klar zwischen zwei Begrifflichkeiten unterschieden werden. Zunächst, in Stufe 1, spricht man von "Vorverteilung" des noch nicht reagierenden Reaktionsgemisches und anschließend, in Stufe 2, von "Fließen" des aufschäumenden Reaktionsgemisches.

Aufgrund der geforderten technischen Eigenschaften, beispielsweise im Hinblick auf die Druckfestigkeit, werden im Stand der Technik Polyurethansysteme, umfassend hochfunktionelle Polyole mit entsprechend hoher Viskosität eingesetzt. Daraus resultieren Polyolmischungen mit hohen Gesamtviskositäten, die sich zwar durch ein gutes Fließen in Stufe 2, jedoch durch eine schlechte Vorverteilung in Stufe 1 auszeichnen.

Maßgeblich für die Qualität der Rohre ist eine gleichmäßige Rohdichteverteilung des Schaumstoffes, diese ist jedoch bei Einsatz der bisherigen Polyurethansysteme nicht hinreichend gut. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaums im Rohrspalt.

Des weiteren ist bei den Systemen des Standes der Technik das Fließvermögen des Schaums begrenzt, so dass nach Erreichen der Abbindezeit der sich überwälzende Schaum zu schlechten Eigenschaften (niedrige Druckfestigkeit, hohe Wasseraufnahme, schlechte Wärmeleitfähigkeit etc.) führt. Diese Schaumstruktur tritt in der Regel an den Rohrenden auf und wird als "Schiebezone" bezeichnet.

Aufgabe ist es daher für große Hohlräume eine Reaktionsmischung bereitzustellen, die sich in diesen Hohlräumen schnell und gleichmäßig verteilt, eine lange Startzeit hat und trotzdem im resultierenden Hartschaum einen sehr kleinen Zelldurchmesser aufweist, um insbesondere gute Dämmeigenschaften zu haben, dabei schnell aushärtet und gute Fließeigenschaften aufweist.

Ferner bestand die Aufgabe der Erfindung darin, ein Polyurethansystem bereitzustellen, welches vorteilhaft bei der Herstellung von gedämmten Rohren verwendet werden kann und dort zu einem Polyurethanschaumstoff mit gleichmäßiger Rohdichteverteilung führt. Ferner soll das Auftreten einer "Schiebezone" vermieden werden.

Gelöst wird diese Aufgabe indem in ein niedrig viskoses Polyurethansystem, auch als Reaktionsgemisch bezeichnet Polyurethanschaumbestandteile eingebracht werden und man diese Mischung aushärten lässt, bevorzugt in einer Form, besonders bevorzugt in einem Hohlraum.

Erfindungsgemäß haben die Polyurethanschaumbestandteile einen mittleren Zelldurchmesser zwischen 0,1 und 0,5 mm.

Gegenstand der Erfindung ist somit die beschriebene Mischung, der daraus entstehende Polyurethanhartschaum, mit dem Polyurethanhartschaum hergestellte Gegenstände, und das Verfahren unter Verwendung dieser Mischung geformte Gegenstände herzustellen oder Hohlkörper zu füllen sowie die Verwendung der Ausgangsmaterialien für ein entsprechendes Verfahren.

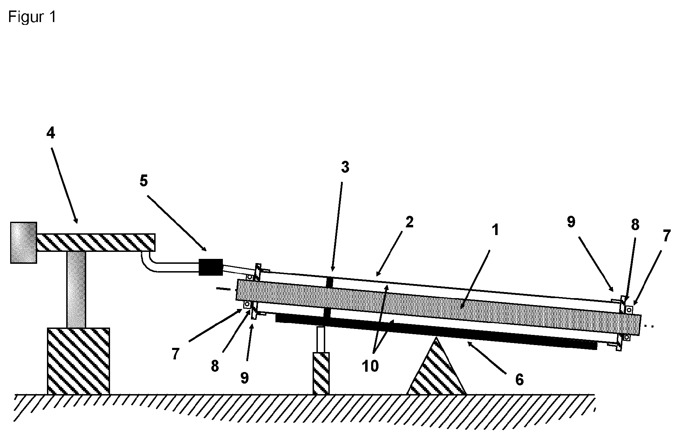

Figur 1 veranschaulicht ein bevorzugtes Herstellungsverfahren eines thermisch isolierten Rohres. Es bedeutet:
1 Mediumrohr, d.h. Rohr zur Beförderung von Flüssigkeiten und/oder Gasen
2 Mantelrohr
3 Abstandhalter
4 Dosiermaschine für niedrigviskoses Polyurethansystem
5 Mischkopf
6 neigbarer Schäumtisch
7 Schelle
8 Dichtung
9 Endkappe mit Entlüftungslöchern
10 Ringspalt mit Mischung aus niedrig viskosem Polyurethansystem und Polyurethanhartschaumbestandteilen, die zum Polyurethanhartschaum aushärtet.

Im Rahmen dieses bevorzugten Verfahrens wird das Mediumrohr (1) mit Abstandshaltern (3) versehen, die der Zentrierung des inneren Rohres, Mediumrohres 1, im äußeren Mantelrohr (2), dienen. Das Mediumrohr (1) wird in das äußere Mantelrohr (2) geschoben, so dass sich ein Ringspalt (10) zwischen beiden Rohren ergibt, der konzentrisch ist. Dieser Ringspalt wird mit einer Mischung, die aus niedrig viskosem Polyurethansystem und Polyurethanhartschaumbestandteilen, die zum Polyurethanhartschaum aushärtet, so befüllt, dass die Polyurethanhartschaumbestanteile gleichmäßig in einer Polyurethanmatrix, die aus dem niedrig viskosen Polyurethansystem entsteht, verteilt sind. Die Mischung wird im Mischkopf (5) hergestellt, wo die Ausgangsstoffe für die Polyurethanmatrix (= niedrig viskoses Polyurethansystem) mit den Polyurethanschaumbestandteile gleichmäßig vermengt werden.

Herstellung der Polyurethansschaumstoffbestandteile

Bevorzugt werden die Polyurethanschaumbestandteile auf kontinuierlich arbeitenden Doppelbandanlagen hergestellt. Hierzu werden mit einer Hochdruckmaschine die Polyol- und Isocyanatkomponente dosiert und in einem Mischkopf vermischt. Bevorzugt werden dem Polyolgemisch zuvor mit separaten Pumpen Katalysatoren und/oder Treibmittel zudosiert. Die Mischung der Ausgangskomponenten wird kontinuierlich auf eine untere Deckschicht aufgetragen. Die untere Deckschicht mit dem Auftrag und die obere Deckschicht laufen in das Doppelband ein. Hier schäumen die Ausgangskomponenten auf und härten aus. Nach dem Verlassen des Doppelbandes wird der endlose Strang des Schaumes in den gewünschten Abmessungen zerkleinert, bevorzugt erfolgt dies durch mechanische Zerkleinerung. Zur mechanischen Zerkleinerung werden bevorzugt Walzen, Mühlen, Häcksler oder ähnliche Geräte verwendet. In anderen bevorzugten Ausführungsformen wird die Zerkleinerung mit Druckluft oder Wasserstrahl durchgeführt. In weiteren bevorzugten Ausführungsformen werden die Polyurethanschaumbestandteile thermisch oder mit energiereicher Strahlung, bevorzugt mit Laserstrahlen hergestellt.

In weiteren bevorzugten Ausführungsformen wird ein dünner Polyurethanstrang als Schaum extrudiert, der dann in die gewünschten kleinen Polyurethanschaumstoffbestandteile zerkleinert wird. Auch hier finden bevorzugt die oben aufgeführten Zerkleinerungsverfahren Anwendung.

Die Ausgangskomponenten werden bevorzugt bei einer Temperatur von 15 °C bis 35 °C, weiter bevorzugt von 20 °C bis 30 °C gemischt. Bevorzugt werden die vermengten Ausgangskomponenten mit Hoch- oder Niederdruckdosiermaschinen in geschlossene Stützwerkzeuge gegossen.
In anderen Ausführungsformen werden Polyurethanschaumstoffbestandteile aus Aufarbeitung und Wiederverwendung (Recycling) geeigneter Schäume hergestellt. Geeignete Abfälle fallen insbesondere bei der kontinuierlichen Fertigung von Rohren oder Sandwichpanelen an.

Der Einsatz der erfindungsgemäßen Polyurethan-Hartschäume erfolgt bevorzugt zur Wärmedämmung, weiter bevorzugt von Hohlräumen, bevorzugt von solchen in Kühlgeräten, Behältern, Rohren oder Gebäuden, besonders bevorzugt von Rohren, die zum Transport von warmen und/oder kalten Medien verwendet werden, ganz besonders bevorzugt von Fernwärmerohren, besonders bevorzugt nach EN 253:2009. Gleichermaßen bevorzugt wird der Polyurethanhartschaum für das Befüllen von Muffen verwendet, die bei der Verbindung von zweier isolierten Mediumrohre, die Verbindungsstelle zumindest isolieren und ferner von mechanischer Beschädigung schützen.

Polyurethan-Schaumstoffe, insbesondere Polyurethan-Hartschaumstoffe, sind seit langem bekannt und vielfach in der Literatur beschrieben. Ihre Herstellung erfolgt üblicherweise durch Umsetzung von organischen Polyisocyanaten (a1) mit Verbindungen mit mindestens zwei mit Isocyanatgruppen reaktiven Wasserstoffatomen (b1), im weiteren auch vereinfacht als Verbindung (b1) angesprochen, bevorzugt Polyolen.

Den Polyurethan-Schaumstoffen werden in bevorzugten Ausführungsformen Hilf- und/oder Zusatzstoffe zugegeben.

Als organische Polyisocyanate (a1) kommen vorzugsweise aromatische mehrwertige Isocyanate in Betracht.

Bevorzugte Isocyante sind 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethandiisocyanaten und Polyphenyl-polymethylen-polyisocyanaten (Roh-MDI) und Mischungen aus Roh-MDI und Toluylendiisocyanaten.

Die organischen Di- und Polyisocyanate können einzeln oder in Form von Mischungen eingesetzt werden.

Ebenfalls bevorzugt verwendet werden auch mehrwertige Isocyanate, d.h. Produkte, die durch chemische Umsetzung organischer Di- und/oder Polyisocyanate erhalten werden. Beispielhaft bevorzugt genannt seien Isocyanurat- und/oder Urethangruppen enthaltende Di- und/oder Polyisocyanate. In bevorzugten Ausführungsformen sind modifizierten Polyisocyanate miteinander oder mit unmodifizierten organischen Polyisocyanaten wie z.B. 2,4'-, 4,4'-Diphenylmethandiisocyanat, Roh-MDI, 2,4- und/oder 2,6-Toluylen-diisocyanat gemischt.

In einer der bevorzugten Ausführungsformen finden auch Umsetzungsprodukte von mehrwertigen Isocyanaten mit mehrwertigen Polyolen, sowie deren Mischungen mit anderen Di- und Polyisocyanaten Verwendung.

Besonders bevorzugt wird als organisches Polyisocyanat (a1) Roh-MDI mit einem NCO-Gehalt von 29 Gew.-% bis 33 Gew.-% und einer Viskosität bei 25°C im Bereich von 0,15 Pa*s bis 1 Pa*s, bestimmt nach DIN 53019-1:2009 (9.2.5 - Zylinder-Rotationsviskosimeter).

Als Verbindungen (b1) kommen insbesondere Polyetheralkohole und/oder Polyesteralkohole mit OH-Zahlen im Bereich von 0,1 bis 1,2 g KOH/g zum Einsatz.

Die Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, bevorzugt Bernsteinsäure, Glutarsäure, Adipinsäure, Korksäure, Azelainsäure, Sebacinsäure, Decandicarbonsäure, Maleinsäure, Fumarsäure und weiter bevorzugt Phthalsäure, Isophthalsäure, Terephthalsäure und die isomeren Naphthalindicarbonsäuren, hergestellt.

Die Verbindung (b1) mit mindestens zwei gegenüber Isocyanat reaktiven Wasserstoffatomen hat bevorzugt eine Funktionalität zwischen 2 und 8, insbesondere 3 und 7.

Bevorzugt kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden bevorzugt Ethylenoxid und/oder Propylenoxid, weiter bevorzugt reines 1,2-Propylenoxid eingesetzt.

Als Startmoleküle für die Verbindung (b1) kommen bevorzugt Verbindungen mit mindestens 3, vorzugsweise 4 bis 8 Hydroxylgruppen oder mit mindestens zwei primären Aminogruppen je Molekül zum Einsatz.

Die Startmoleküle mit mindestens 3, vorzugsweise 4 bis 8 Hydroxylgruppen im Molekül werden bevorzugt aus folgender Gruppe ausgewählt: Trimethylopropan, Glycerin, Pentaerythrit, Zuckerverbindungen, bevorzugt Glucose, Sorbit, Mannit und/oder Saccharose, mehrwertige Phenole, Resole, oligomere Kondensationsprodukte aus Phenol und Formaldehyd, Mannich-Kondensate aus Phenolen, Formaldehyd und Dialkanolaminen sowie Melamin.

Als Startmoleküle mit mindestens zwei primären Aminogruppen im Molekül werden vorzugsweise aromatische Di- und/oder Polyamine, bevorzugt Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 0,1 gKOH/g bis 1,2 gKOH/g und insbesondere 0,24 gKOH/g bis 0,57 gKOH/g.

Zu den Verbindungen mit mindestens zwei gegenüber Isocyanat reaktiven Wasserstoffatomen (b) gehören auch die gegebenenfalls mit verwendeten Kettenverlängerer und/oder Vernetzer. Zur Modifizierung der mechanischen Eigenschaften werden bevorzugt auch difunktionelle Kettenverlängerungsmittel, tri- und höherfunktionelle Vernetzungsmittel oder gegebenenfalls auch Gemischen davon eingesetzt.

Als Kettenverlängerungs- und/oder Vernetzungsmittel werden vorzugsweise Alkanolamine und insbesondere Diole und/oder Triole mit zahlenmittleren Molekulargewichten von weniger als 0,4 kMol, vorzugsweise 0,06 kMol bis 0,3 kMol verwendet.

Kettenverlängerungsmittel, Vernetzungsmittel oder Mischungen davon werden zweckmäßigerweise in einer Menge von 1 Gew.-% bis 20 Gew.-%, vorzugsweise 2 Gew.-% bis 5 Gew.-%, bezogen auf die Verbindung (b1) bevorzugt das Polyol, eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Bevorzugt werden die Polyurethan-Schaumstoffe in Anwesenheit von Treibmitteln, Katalysatoren und Zellstabilisatoren sowie, falls erforderlich weiteren, Hilfs- und/oder Zusatzstoffen durchgeführt.

Ein bevorzugtes Treibmittel ist Wasser, das mit Isocyanatgruppen unter Abspaltung von Kohlendioxid reagiert. In anderen bevorzugten Ausführungsformen werden in Kombination mit oder an Stelle von Wasser sogenannte physikalische Treibmittel eingesetzt. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt der physikalischen Treibmittel unter 51 °C. Zu den physikalischen Treibmitteln zählen auch Verbindungen, die bei Raumtemperatur gasförmig sind und unter Druck in die Einsatzkomponenten eingebracht bzw. in ihnen gelöst werden, einige bevorzugte Vertreter sind Kohlendioxid, niedrigsiedende Alkane und Fluoralkane.

Bevorzugt werden die physikalischen Treibmittel ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Weitere bevorzugte physikalische Treibmittel sind Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan.

Die genannten physikalischen Treibmittel können allein oder in beliebigen Kombinationen untereinander eingesetzt werden.

Als Katalysatoren werden insbesondere Verbindungen eingesetzt, welche die Reaktion der Isocyanatgruppen mit der mit Isocyanatgruppen reaktiven Verbindung (b1) stark beschleunigen.

Solche Katalysatoren sind stark basische Amine, wie z. B. sekundäre aliphatische Amine, Imidazole, Amidine, sowie Alkanolamine.

In einigen bevorzugten Ausführungsformen werden in den Polyurethan-Schaumstoff Isocyanuratgruppen eingebaut. Hierfür werden spezielle Isocyanurat-Katalysatoren benötigt. Als Isocyanurat-Katalysatoren werden beispielsweise bevorzugt Metallcarboxylate, insbesondere Kaliumacetat und dessen Lösungen, eingesetzt.

Die Katalysatoren werden, je nach Erfordernis, alleine oder in beliebigen Mischungen untereinander eingesetzt.

Bei der Herstellung der Polyurethan-Schaumstoffe werden in bevorzugten Ausführungsformen Hilfs- und Zusatzstoffe eingesetzt. Dazu zählen beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente.

Nähere Angaben über üblichen Hilfs- und Zusatzstoffe sind der Fachliteratur zu entnehmen, siehe beispielsweise Kunststoffhandbuch, Band VII, herausgegeben von Vieweg und Höchtlen, Carl Hanser Verlag, München 1966 (S. 103-113).

Als Flammenschutzmittel werden bevorzugt organische Phosphorsäure- und oder Phosphonsäureester eingesetzt. Vorzugsweise werden gegenüber Isocyanatgruppen nicht reaktive Verbindungen eingesetzt. Auch Chlor enthaltende Phosphorsäureester gehören zu den bevorzugten Verbindungen.

Bevorzugte Vertreter dieser Gruppe von Flammschutzmitteln sind Triethylphosphat, Diphenylkresylphosphat, Tris-(Chlorpropyl)-phosphat sowie Diethylethanphoshonat.

Daneben kommen in anderen bevorzugten Ausführungsformen auch Brom enthaltende Flammschutzmittel zum Einsatz. Als Brom enthaltende Flammschutzmittel werden vorzugsweise gegenüber der Isocyanatgruppe reaktive Gruppen aufweisende Verbindungen eingesetzt. Derartige Verbindungen sind bevorzugt Ester der Tetrabromphtalsäure mit aliphatischen Diolen und Alkoxylierungsprodukte des Dibombutendiols.

Auch kommen bevorzugt Verbindungen zur Anwendung, die sich aus der Reihe der bromierten, OH-Gruppen enthaltenden Neopentylverbindungen ableiten.

Zur Herstellung der Polyurethan-Hartschaumstoffe werden die organischen Polyisocyanate (a1), und die Verbindung (b1) in solchen Mengen zur Umsetzung gebracht, dass der Isocyanatindex in einem Bereich zwischen 100 und 220, vorzugsweise zwischen 105 und 180, besonders bevorzugt zwischen 110 und 160 liegt. Der Isocyanatindex wird berechnet. Er stellt das Verhältnis der Anzahl, der zur Reaktion zur Verfügung stehenden Isocyanatgruppen, zur Anzahl, der zur Verfügung stehenden Hydroxylgruppen dar. Dieses Verhältnis wird noch mit 100 multipliziert. Für Angaben größer 100 liegt ein Überschuss an Isocyanat vor.

Die Polyurethan-Hartschaumstoffe werden bevorzugt entweder diskontinuierlich oder kontinuierlich mit Hilfe bekannter Mischvorrichtungen hergestellt.

Bevorzugt werden die erfindungsgemäßen Polyurethan-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen (b), ggf. mit mindestens einem Flammschutzmittel, mindestens einem Treibmittel, ggf. mindestens einem Katalysator sowie ggf. weiteren Hilfs- und/oder Zusatzstoffen zur Polyolkomponente vermischt und diese mit dem mindestens einem Polyisocyanat oder Mischungen aus den Polyisocyanaten und gegebenenfalls Treibmitteln, auch als Isocyanatkomponente bezeichnet, zur Umsetzung gebracht.

Polyolkomponente und Isocyantkomponente werden auch als Ausgangskomponenten angesprochen. Diese Ausgangskomponenten werden zumeist bei einer Temperatur von 15 °C bis 35 °C, vorzugsweise von 20 °C bis 30 °C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren.

Auch die kontinuierliche Vermischung der Isocyanatkomponente mit der Polyolkomponente zur Herstellung von Sandwich- oder Dämmelementen auf Doppelbandanlagen ist eine bevorzugte Ausführungsform. Bei dieser Technologie ist es bevorzugt, die Katalysatoren und die Treibmittel über weitere Dosierpumpen in die Polyolkomponente zu dosieren. Dabei können die ursprünglichen Komponenten in bis zu 8 Einzelkomponenten aufgeteilt werden. Die Verschäumrezepturen lassen sich, abgeleitet von dem Zwei-Komponentenverfahren in einfacher Weise auf die Verarbeitung von Mehrkomponentensystemen umrechnen.

Die Dichte der Polyurethanhartschaumstoffbestandteile beträgt vorzugsweise 10 kg/m³ bis 400 kg/m³, vorzugsweise 20 kg/m³ bis 200 kg/m³, weiter bevorzugt 30 kg/m³ bis 80 kg/m³, ganz besonders bevorzugt 30 kg/m³ bis 70 kg/m³.

Der Vorteil ist, dass die eingesetzten Schaumstoffe eine niedrigere Rohdichte und/oder einen kleineren Zelldurchmesser als die Matrix haben. Beides führt zu einer niedrigeren Wärmeleitfähigkeit des gesamten Schaumes im Hohlraum.

Die Schaumzellen in den Polyurethanhartschaumbestandteilen haben einen mittleren Zelldurchmesser zwischen 0,1 mm und 0,5 mm, weiter bevorzugt zwischen 0,11 mm und 0,3 mm, besonders bevorzugt zwischen 0,12 mm und 0,2 mm und ganz besonders bevorzugt zwischen 0,12 mm und 0,18 mm. Maßgeblich für die Bestimmung des mittleren Zelldurchmessers ist EN 489:2009 (gemäß Abschnitt 5.4.5.1).

Weiter bevorzugt haben zumindest 80 % der Schaumzellen pro Volumeneinheit den genannten Zelldurchmesser, noch weiter bevorzugt mindestens 90 %, und ganz besonders bevorzugt mindestens 95 %.

Die maximale Ausdehnung der Polyurethanschaumbestandteile die Polyurethanschaumbestandteile liegt zwischen 0,06 cm und 1 cm, weiter bevorzugt zwischen 0,1 cm und 0,8 cm, besonders bevorzugt zwischen 0,1 cm und 0,5 cm.

In einer bevorzugten Ausführungsform sind Polyurethanschaumbestandteile beliebig geformt, so wie sie bei Zerkleinerungsvorgängen von größeren Schäumen entstehen. In einer anderen bevorzugten Ausführungsform haben die Polyurethanschaumbestandteile abgerundete Ecken, bevorzugt sind sie eiförmig und/oder rund.

Die Polyurethanmatrix wird durch Umsetzung mindestens einer Isocyanatkomponente (a2) mit mindestens einer mit Isocyanat reaktiven Verbindung (b2), bevorzugt einem Polyol hergestellt, gegebenenfalls unter Verwendung mindestens eines Katalysators (c2) und/oder gegebenenfalls mindestens eines chemischen Treibmittels (d2). Die Mischung aus der die Polyurethanmatrix hergestellt wird, wird auch als Reaktionsgemisch oder niedrig viskoses Polyurethansystem bezeichnet.

Die Verbindung (b2), gegebenenfalls enthaltend mindestens einen Katalysator (c2) und/oder mindestens ein chemisches Treibmittel (d2) habe bevorzugt eine Viskosität von weniger als 2 Pa*s und mehr als 0,4 Pa*s, bevorzugt von weniger als 1,8 Pa*s und mehr als 0,5 Pa*s und besonders bevorzugt von weniger als 1,5 Pa*s und mehr als 0,5 Pa*s, gemessen nach DIN 53019-1:2008 (9.2.5 - Zylinder-Rotationsviskosimeter) bei 20°C.

Wird ein Treibmittel bei der Herstellung des Hartschaums zugesetzt, so beziehen sich die angegebenen Viskositäten der Verbindung (b2) als auch die des Reaktionsgemisches jeweils auf die Viskosität mit dem Treibmittel.

Das Reaktionsgemisch hat bevorzugt eine Viskosität im unreagierten Zustand bei 20°C zwischen 0,3 Pa*s und 1,5 Pa*s, bevorzugt 0,35 Pa*s und 1,2 Pa*s, besonders bevorzugt 0,4 Pa*s und 1,0 Pa*s und ganz besonders bevorzugt 0,4 Pa*s und 0,8 Pa*s bestimmt nach DIN 53019-1:2008 (9.2.5 - Zylinder-Rotationsviskosimeter). Die Viskositätsmessung des Polyurethansystems erfolgt vor Zugabe der Polyurethanschaumstoffbestandteile, wenn alle Bestanteile des Reaktionsgemisches vermischt sind. Wird ein physikalisches Treibmittel verwendet, so muss dieses vor der Viskositätsmessung enthalten sein.

Als Isocyanatkomponente (a2) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a2) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a2), beispielsweise bei Temperaturen von etwa 80 °C, mit Verbindungen mit gegenüber Isocyanaten reaktiven Wasserstoffatomen (b2), bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 Gew.-% bis 25 Gew.-%, vorzugsweise 10 Gew.-% bis 22 Gew.-%, besonders bevorzugt 13 Gew.-% bis 20 Gew.-% beträgt.

Zur Herstellung der Polyurethanmatrix wird bevorzugt Roh-MDI eingesetzt.

In einer bevorzugten Ausführungsform wird die Isocyanatkomponente (a2) so gewählt, dass sie eine Viskosität weniger als 1300 mPas, bevorzugt von 100 mPas bis 800 mPas, besonders bevorzugt von 120 mPas bis 600 mPas, insbesondere von 180 mPas bis 350 mPas, gemessen nach DIN 53019-1:2008 (9.2.5 - Zylinder-Rotationsviskosimeter) bei 20°C, aufweist.

Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Alkalimetallsalze alleine oder in Kombination mit tertiären Aminen eingesetzt. Die Isocyanurat-Bildung führt zu flammwidrigen Polyisocyanurat(PIR)-Schaumstoffen, welche bevorzugt im technischen Hartschaum, beispielsweise im Bauwesen als Dämmplatte oder Sandwichelemente, eingesetzt werden.

Im Rahmen dieser Erfindung ist es bevorzugt, dass die erfindungsgemäßen Polyurethansysteme und Polyurethanschaumstoffe im wesentlichen frei von Isocyanuratgruppen sind. Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäßen Polyurethanhartschaumstoff im wesentlichen keine Isocyanuratgruppen vorhanden.

In einer weiteren Bevorzugten Ausführungsform wird der Verbindung (b2) ein physikalisches Treibmittel hinzugefügt. Die Zugabe von physikalischem Treibmittel führt zu einer signifikanten Absenkung der Viskosität.

Als Verbindung (b2) kommen im allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH2-Gruppen.

Als Polyole kommen bevorzugt Verbindungen auf Basis von Polyesterolen oder Polyetherolen zum Einsatz. Die Funktionalität der Polyetherole und/oder Polyesterole beträgt bevorzugt 1,9 bis 8, weiter bevorzugt 2,4 bis 7, besonders bevorzugt 2,9 bis 6.

Die Verbindung (b2) hat bevorzugt eine Hydroxylzahl zwischen 200 mg KOH/g und 1000 mg KOH/g, bevorzugt 250 mg KOH/g bis 800 mg KOH/g, besonders bevorzugt 300 mg KOH/g bis 600 mg KOH/g, ganz besonders bevorzugt 300 mg KOH/g bis 500 mg KOH/g.

Bevorzugt enthält Verbindung (b2) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3x-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Saccharose, Glycerin und TDA verwendet.

Die Polyolmischung kann optional als Bestandteil (c2) Katalysatoren enthalten, die die PUR- und/oder die PIR-Reaktion beschleunigen. Als Katalysatoren (c2) werden üblicherweise Verbindungen verwendet, welche die Reaktion der Hydroxylgruppen enthaltenden Verbindungen der Verbindung (b2) mit den Isocyanatgruppen beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan sowie (2-Hydroxypropyl)trimethylammonium-2-ethylhexanoat (CAS-Nummer 62314-22-1), (2-Hydroxypropyl)trimethylammoniumformiat (CAS 62314-25-4), 2-((2-Dimethylamino)ethyl)me-thylamino)ethanol (CAS-Nummer 2212-32-0) und/oder N,N',N"-Tris(dimethylamino-propyl)hexa-hydrotriazin (CAS-Nummer 15875-13-5, Dimethylcyclohexylamin (CAS-Nummer 98-94-2).

Als bevorzugte Verbindungen, die die Bildung von Isocyanuratstrukturen katalysieren (PIR-Katalysatoren), werden Kaliumacetat, Kaliumformiat und/oder Kaliumoctoat, besonders bevorzugt Kaliumacetat eingesetzt werden.

Die Katalysatoren werden im allgemeinen in einer Menge von 0,001 bis 5 Gew.-%, insbesondere von 0,05 bis 3,0 Gew.-% Katalysator, bezogen auf das Gewicht der Komponente (b), eingesetzt.

In dieser Schrift gilt im Zweifel die CAS-Nummer als eindeutige chemische Bezeichnung.

Die Verbindung (b2) kann ferner optional als Bestandteil (c3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, insbesondere von 1,0 bis 3,0 Gew.-%, bezogen auf das Gewicht der Verbindung (b2), eingesetzt.

Wie vorstehend erwähnt kann die Verbindung (b2) physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 Gew.-% bis 25 Gew.-%, bevorzugt 2 Gew.-% bis 20 Gew.-%, besonders bevorzugt 3 Gew.-% bis 16 Gew.-%, bezogen auf das Gesamtgewicht der Komponenten (b2), enthaltend das Treibmittel, eingesetzt.

Zu den Verbindungen mit mindestens zwei gegenüber Isocyanat reaktiven Wasserstoffatomen (b2) gehören auch die gegebenenfalls mit verwendeten Kettenverlängerer und/oder Vernetzer. Zur Modifizierung der mechanischen Eigenschaften werden bevorzugt auch difunktionelle Kettenverlängerungsmittel, tri- und höherfunktionelle Vernetzungsmittel oder gegebenenfalls auch Gemischen davon eingesetzt.

Als Kettenverlängerungs- und/oder Vernetzungsmittel werden vorzugsweise Alkanolamine und insbesondere Diole und/oder Triole mit zahlenmittleren Molekulargewichten von weniger als 0,4 kMol, vorzugsweise 0,06 kMol bis 0,3 kMol verwendet.

Kettenverlängerungsmittel, Vernetzungsmittel oder Mischungen davon werden bevorzugt in einer Menge von 1 Gew.-% bis 20 Gew.-%, weiter bevorzugt 2 Gew.-% bis 5 Gew.-%, bezogen auf die Verbindung (b1) bevorzugt das Polyol enthaltend das Kettenverlängerungsmittel, Vernetzungsmittel oder Mischungen davon, jedoch ohne physikalisches Treibmittel, eingesetzt.

Die Vernetzer werden im allgemeinen in einer Menge von 1 Gew.-% bis 10 Gew.-%, bevorzugt von 2 Gew.-% bis 6 Gew.-%, bezogen auf das Gesamtgewicht der Verbindung (b2) enthaltend das Kettenverlängerungsmittel, Vernetzungsmittel oder Mischungen davon, jedoch ohne physikalisches Treibmittel, eingesetzt.

In einer weiteren bevorzugten Ausführungsform enthält die Verbindung (b2) als Bestandteil (e5) Kettenverlängerungsmittel, die der Erhöhung der Vernetzungsdichte dienen. Unter Kettenverlängerungsmittel werden Verbindungen verstanden, die ein Molekulargewicht von 0,06 kg/mol bis weniger als 0,4 kg/mol aufweisen und 2 gegenüber Isocyanaten reaktive Wasserstoffatome aufweisen. Bevorzugte Beispiele hierfür sind Butandiol, Diethylenglykol, Dipropylenglykol sowie Ethylenglykol.

Die Kettenverlängerungsmittel werden im allgemeinen in einer Menge von 2 Gew.-% bis 20 Gew.-%, bevorzugt von 4 bis 15 Gew.-%, bezogen auf das Gesamtgewicht der Verbindung (b2) eingesetzt. Die Menge des physikalischen Treibmittels wird hierbei nicht berücksichtigt.

Die Vernetzer (d2) und Kettenverlängerungsmittel (e2) können in der Verbindung (b2) einzeln oder in Kombination eingesetzt werden.

Die Verbindung (b2), bevorzugt das mindestens eine Polyol, hat einer Hydroxylzahl von mehr als 70 mg KOH/g, bevorzugt mehr als 100 mg KOH/g, weiter bevorzugt mehr als 150 mg KOH/g, wobei die Hydroxylzahl bevorzugt kleiner gleich 1000 mg KOH/g ist, weiter bevorzugt, kleiner 800 mg KOH/g und besonders bevorzugt kleiner als 600 mg KOH/g.

Bei der Umsetzung der Ausgangsstoffe der Polyurethanmatrix werden die Polyisocyanate (a2) und die Verbindung (b2), bevorzugt Polyole, bevorzugt in solchen Mengen zur Umsetzung gebracht, dass die Isocyanat-Kennzahl der Matrix 90 bis 250, bevorzugt 100 bis 180, besonders bevorzugt 110 bis 159 beträgt.

In einer bevorzugten Ausführungsform werden die Komponenten der Ausgangsstoffe für die Polyurethanmatrix so gewählt, dass der resultierende Schaumstoff eine Druckfestigkeit (bei Rohdichte 60 kg/m³) von größer 0,25 N/mm², bevorzugt größer 0,3 N/mm², besonders bevorzugt größer 0,35 N/mm², gemessen nach DIN 53421, aufweist.

Dem Isocyanat (a1) und/oder (a2) und oder der Verbindung (b1) und/oder (b2) können gegebenenfalls auch noch Zusatzstoffe (f) einverleibt werden. Unter Zusatzstoffe (f) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Weiterhin ist Gegenstand der Erfindung ein gedämmtes Rohr, aufgebaut aus
i) einem innenliegenden Rohr, das dem Transport eines Mediums dient, auch als Mediumrohr angesprochen
ii) einer Schicht aus Dämmmaterial, enthaltend den erfindungsgemäßen Polyurethanhartschaumstoff, und
iii) einem Mantelrohr, in dem sich das Mediumrohr, bevorzugt konzentrisch befindet.

Bei dem Mediumrohr (i) handelt es sich im allgemeinen um ein Stahlrohr mit einem Außendurchmesser von 1 cm bis 120 cm, bevorzugt 4 cm bis 110 cm und einer Länge von 1 m bis 24 m, bevorzugt 6 m bis 16 m.

Auf der Außenseite des Mediumrohres angeordnet ist eine Schicht aus Dämmmaterial (ii), enthaltend den erfindungsgemäßen Polyurethanhartschaumstoff. Diese Schicht weist im allgemeinen eine Dicke von 1 cm bis 20 cm, bevorzugt 2 cm bis 15 cm auf.

In einer bevorzugten Ausführungsform weist die Schicht aus Dämmmaterial eine Gesamtrohdichte von unter 110 kg/m³, bevorzugt von 50 kg/m³ bis 100 kg/m³, besonders bevorzugt 60 kg/m³ bis 90 kg/m³ auf. Unter Gesamtrohdichte ist hier die Rohdichteverteilung über den Rohrquerschnitt und die Rohrlänge gemeint.

In einer weiteren bevorzugten Ausführungsform weist die Schicht aus Dämmmaterial (ii), enthaltend den erfindungsgemäßen Polyurethanschaumstoff eine Wärmeleitfähigkeit von weniger als 28 mW/mK, bevorzugt von 22 mW/mK bis 27 mW/mK, besonders bevorzugt 22 mW/mK bis 26,5 mW/mK gemessen nach EN ISO 8497 bei einer Mitteltemperatur von 50°C auf.

Das Mantelrohr (iii) umgibt die Schicht aus Dämmmaterial und besteht im allgemeinen aus Kunststoff, bevorzugt aus Polyethylen, und weist üblicherweise eine Wandstärke von 1 mm bis 30 mm, bevorzugt 5 mm bis 30 mm auf. Der Innendurchmesser des Mantelrohrs (iii) beträgt bevorzugt 6 cm bis 140 cm, besonders bevorzugt 10 cm bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen Polyurethanhartschaumstoff und Mantel, wobei die Folie zur Verbesserung der Sperrwirkung mindestens eine metallische Lage enthält.

Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

Schließlich ist Gegenstand der Erfindung ein Verfahren zur Herstellung von gedämmten Hohlkörpern bevorzugt gedämmter Rohre, umfassend die Schritte:
1) Bereitstellen eines Hohlkörpers, bevorzugt eines Mediumrohres und eines Mantelrohres, wobei das Mediumrohr innerhalb des Mantelrohrs so angeordnet ist, dass sich an allen Stellen bevorzugt ein gleichmäßig starker Ringspalt ergibt, bevorzugt mittels Abstandhalter,
2) Einfüllen der Mischung bestehend aus Polyurethanhartschaumbestandteilen und Ausgangsstoffen zur Herstellung einer Polyurethanmatrix in den Hohlraum, bevorzugt den Ringspalt zwischen Mediumrohr und Mantelrohr,
3) Aushärten der Polyurethanmatrix.

In einer bevorzugten Ausführungsform werden isolierte Rohre mit Hilfe der diskontinuierlichen Rohr-in-Rohr Produktion hergestellt. Im Rahmen dieses Verfahrens wird das innen liegende Rohr, das bevorzugt aus Stahl ist, bevorzugt konzentrisch in ein äußeres Rohr, das auch als Hüllrohr angesprochen wird, geschoben, so dass sich ein Ringspalt zwischen beiden Rohren ergibt. Bevorzugt befinden sich zwischen dem inneren Rohr, auch Mediumrohr genannt, und dem Hüllrohr, Abstandshalter, die der Zentrierung des inneren Rohres dienen. Grundsätzlich ist jede über den Produktionszeitraum stabile Hülle, die der Formgebung des Polyurethanhartschaumes dient, geeignet als Hüllrohr zu dienen. Das Hüllrohr ist in einer bevorzugten Ausführungsform aus Polyethylen oder Wickelfalzblech.

In einer weiteren bevorzugten Ausführungsform wird das innenliegende Rohr in eine mehrfach zu verwendende Rohrform gelegt, welche aus zwei oder mehr Segmenten besteht und das Reaktionsgemisch rohrförmig ausreagieren lässt. Anschließend wird auf den PUR-Schaum mittels Extrudertechnik ein Hüllrohr aufgebracht. Dieses Verfahren hat den Vorteil, dass gegebenenfalls die Anzahl an Abstandshaltern reduziert werden oder vollständig auf diese verzichtet werden kann.

Die Einheit, bestehend aus innen liegendem Mediumrohr und außen liegendem Hüllrohr wird auch als Doppelrohr mit einem dazwischen liegenden Ringspalt angesprochen. Der Ringspalt wird mit der Mischung gefüllt, bestehend aus Polyurethanhartschaumstoffbestandteilen und einem Reaktionsgemisch. Für den Füllvorgang wird das Doppelrohr mit Endkappen (9) versehen, die den Ringspalt in beiden Richtungen abdichten und mit Entlüftungslöchern ausgestattet sind, so dass beim Füll- und Aushärtevorgang Gas aus dem Ringspalt entweichen kann.

Das Doppelrohr wir bevorzugt auf einem leicht geneigten Schäumtisch (6) mit der Mischung befüllt, wobei das Rohr bevorzugt in einem Winkel von 1 ° bis 10 ° geneigt wird, weiter bevorzugt 1,5 ° bis 7 °. Bevorzugt ist das Doppelrohr mit Endkappen (9) versehen, so dass sich die Mischung nur in dem Ringspalt ausbreiten kann.

In den Ringspalt wir mit einer Polyurethandosiermaschine (4) die flüssige Mischung eingefüllt, die in noch flüssiger Form den Ringspalt füllt und dann aushärtet.

In einer anderen bevorzugten Ausführungsform wird die Mischung im Hohlraum stark verdichtet, so dass ohne Schellen (7) die Endkappen (9) weggedrückt würden. Ohne Dichtung 8 würde Material zwischen Mediumrohr (1) und Endkappe (9) herausgedrückt. Die Entlüftungslöcher der Endkappen werden bei beginnendem Schaumaustritt mit Stopfen oder automatischen Ventilen verschlossen.

Der Einsatz der erfindungsgemäßen Mischung führt im Verfahren zur Herstellung gedämmter Hohlräume, bevorzugt gedämmter Rohre zu folgenden Vorteilen:
Vereinfachte und/oder schnellere Produktion von größeren Hohlräumen, bevorzugt von längeren Rohrsegmenten, abgesenkte Gesamtrohdichte im Hohlkörper, bessere Rohdichteverteilung, niedrigere Wärmeleitfähigkeit, erhöhte Produktivität durch geringere Aushärtezeiten. Die daraus hergestellten isolierten Hohlräume haben entsprechende Vorteile.

Ein weiterer Erfindungsgegenstand ist die Verwendung von Hartschaumbestandteilen und/oder unausgehärtetem Reaktionsgemisch mit den oben beschriebenen Eigenschaften zur Herstellung von Polyurethanhartschaumstoff, enthaltend vorproduzierte Hartschaumbestandteile.

Alle in der Anmeldung ausgeführten Ausführungsformen gelten als jeweils mit jeder anderen Ausführungsform offenbart, auch wenn aus Gründen der Übersichtlichkeit nicht jede einzelne Kombination einer Ausführungsform mit jeder anderen Ausführungsform ausformuliert wurde.

## Patentansprüche

1. Polyurethanhartschaum **dadurch gekennzeichnet, dass** Polyurethanhartschaumbestanteile in einer Polyurethanmatrix eingebettet sind, wobei die Polyurethanschaumbestandteile einen mittleren Zelldurchmesser zwischen 0,1 und 0,5 mm (gemessen nach EN 489:2009, gemäß Abschnitt 5.4.5.1) haben.

2. Polyurethanhartschaum nach Anspruch 1, **dadurch gekennzeichnet, dass** die Dichte der eingesetzten Polyurethanhartschaumbestandteile zwischen 10 kg/m³ und 400 kg/m³ liegen.

3. Polyurethanschaum nach einem der vorhergehenden Ansprüche, **dadurch gekennzeichnet, dass** die Polyurethanschaumbestandteile eine maximale Ausdehnung von 0,06 cm bis 1 cm haben.

4. Gegenstand, **dadurch gekennzeichnet, dass** er mit einem Schaum nach einem der Ansprüche 1 bis 3 zur Isolierung, bevorzugt zur thermischen Isolierung, ummantelt ist.

5. Gegenstand nach Anspruch 4, **dadurch gekennzeichnet, dass** der Gegenstand ein Rohr zum Transport von Flüssigkeiten oder Gasen ist.

6. Rohr nach Anspruch 5 **dadurch gekennzeichnet, dass** das Rohr einen Außendurchmesser zwischen 170 cm und 8 cm hat.

7. Verfahren zur Herstellung eines Hartschaumes gemäß Anspruch 1 **dadurch gekennzeichnet, dass** eine Mischung aus vorproduzierten Hartschaumbestandteilen und Reaktionsgemisch enthaltend eine Isocyanatkomponente (a2) mit mindestens einer mit Isocyanat reaktiven Verbindung (b2), bevorzugt einem Polyol, gegebenenfalls unter Verwendung mindestens eines Katalysators (c2) und/oder gegebenenfalls mindestens eines chemischen Treibmittels (d2) verwendet wird und diese Mischung zu einem Polyurethanhartschaum aushärtet.

8. Verfahren nach Anspruch 7, **dadurch gekennzeichnet, dass** das Reaktionsgemisch bei 20 °C eine Viskosität zwischen 0,3 Pa*s und 1 ,5 Pa*s besitzt.

9. Verfahren nach Anspruch 7 oder 8, **dadurch gekennzeichnet, dass** die Mischung in eine Form gefüllt wird.

10. Verfahren nach Anspruch 9 **dadurch gekennzeichnet, dass** die Form ein Hohlraum ist, der bevorzugt von zwei konzentrisch ineinander liegenden Rohren, deren Enden mit einer Kappe versehen sind, gebildet wird.

11. Verwendung von Hartschaumbestandteilen und/oder unausgehärtetem Reaktionsgemisch zur Herstellung von Polyurethanhartschaum gemäß Anspruch 1, enthaltend vorproduzierte Hartschaumbestandteile.

## Claims

1. A rigid polyurethane foam, wherein rigid polyurethane foam constituents are embedded in a polyurethane matrix, with the polyurethane foam constituents having an average cell diameter in the range from 0.1 to 0.5 mm (measured in accordance with EN 489:2009, section 5.4.5.1).

2. The rigid polyurethane foam according to claim 1, wherein the density of the rigid polyurethane foam constituents used is in the range from 10 kg/m³ to 400 kg/m³.

3. The polyurethane foam according to any of the preceding claims, wherein the polyurethane foam constituents have a maximum dimension of from 0.06 cm to 1 cm.

4. An article enveloped by a foam according to any of claims 1 to 3 for insulation, preferably for thermal insulation.

5. The article according to claim 4, wherein the article is a pipe for the transport of liquids or gases.

6. The pipe according to claim 5, wherein the pipe has an external diameter in the range from 170 cm to 8 cm.

7. A process for producing a rigid foam according to claim 1, wherein a mixture of previously produced rigid foam constituents and reaction mixture comprising an isocyanate component (a2) with at least one compound (b2) which is reactive toward isocyanate, preferably a polyol, optionally using at least one catalyst (c2) and/or optionally at least one chemical blowing agent (d2), is used and this mixture cures to give a rigid polyurethane foam.

8. The process according to claim 7, wherein the reaction mixture has a viscosity at 20°C in the range from 0.3 Pa*s to 1.5 Pa*s.

9. The process according to claim 7 or 8, wherein the mixture is introduced into a mold.

10. The process according to claim 9, wherein the mold is a hollow space which is preferably formed by two pipes which are located concentrically with one another and whose ends are provided with a cap.

11. The use of rigid foam constituents and/or uncured reaction mixture for producing rigid polyurethane foam according to claim 1 comprising previously produced rigid foam constituents.

## Revendications

1. Mousse dure de polyuréthane, **caractérisée en ce que** des constituants de mousse dure de polyuréthane sont incorporés dans une matrice en polyuréthane, les constituants de mousse de polyuréthane ayant un diamètre de cellule moyen compris entre 0,1 et 0,5 mm (mesuré selon EN 489:2009, selon la section 5.4.5.1).

2. Mousse dure de polyuréthane selon la revendication 1, **caractérisée en ce que** la densité des constituants de mousse dure de polyuréthane utilisés est comprise entre 10 kg/m³ et 400 kg/m³.

3. Mousse de polyuréthane selon l'une quelconque des revendications précédentes, **caractérisée en ce que** les constituants de mousse de polyuréthane ont une dimension maximale de 0,06 cm à 1 cm.

4. Article, **caractérisé en ce qu'**il est enrobé avec une mousse selon l'une quelconque des revendications 1 à 3 pour l'isolation, de préférence pour l'isolation thermique.

5. Article selon la revendication 4, **caractérisé en ce que** l'article est un tube pour le transport de liquides ou de gaz.

6. Tube selon la revendication 5, **caractérisé en ce que** le tube a un diamètre extérieur compris entre 170 cm et 8 cm.

7. Procédé de fabrication d'une mousse dure selon la revendication 1, **caractérisé en ce qu'**un mélange de constituants de mousse dure pré-produits et d'un mélange réactionnel contenant un composant isocyanate (a2) avec au moins un composé (b2) réactif avec les isocyanates, de préférence un polyol, éventuellement utilisant au moins un catalyseur (c2) et/ou éventuellement au moins un agent gonflant chimique (d2), est utilisé, et ce mélange est durci en une mousse dure de polyuréthane.

8. Procédé selon la revendication 7, **caractérisé en ce que** le mélange réactionnel présente à 20 °C une viscosité comprise entre 0,3 Pa*s et 1,5 Pa*s.

9. Procédé selon la revendication 7 ou 8, **caractérisé en ce que** le mélange est placé dans un moule.

10. Procédé selon la revendication 9, **caractérisé en ce que** le moule est une cavité, qui est de préférence formée par deux tubes concentriques dont les extrémités sont munies d'un couvercle.

11. Utilisation de constituants de mousse dure et/ou d'un mélange réactionnel non durci pour la fabrication d'une mousse dure de polyuréthane selon la revendication 1, contenant des constituants de mousse dure pré-produits.
